Europäisches Patentamt

European Patent Office

Office européen des brevets

(11) Publication number: **0 052 264**
**B1**

(12) **EUROPEAN PATENT SPECIFICATION**

(45) Date of publication of patent specification: **02.01.86**

(51) Int. Cl.⁴: **A 01 G 31/02**

(21) Application number: **81108926.7**

(22) Date of filing: **26.10.81**

(54) **A hydroponics unit.**

(30) Priority: **18.11.80 IL 61509**

(43) Date of publication of application:
**26.05.82 Bulletin 82/21**

(45) Publication of the grant of the patent:
**02.01.86 Bulletin 86/01**

(84) Designated Contracting States:
**AT BE CH DE FR GB IT LI LU NL SE**

(56) References cited:
**EP-A-0 010 737**
**DE-A-3 016 493**
**GB-A-2 033 714**
**US-A-3 660 933**
**US-A-4 059 922**
**US-A-4 192 097**

(73) Proprietor: **Ein-Gedi**
**Kibbutz Ein-Gedi**
**Moetza Mekomit Tamar Doar Na. Yam**
**Hamelach (IL)**

(72) Inventor: **Soffer, Hillel**
**Kibbutz Ein-Gedi Moetza Mekomit Tamar**
**Doar Na Yam Hamelach (IL)**

(74) Representative: **Wuesthoff, Franz, Dr.-Ing. et al**
**Patentanwälte Wuesthoff -v. Pechmann-**
**Behrens-Goetz Schweigerstrasse 2**
**D-8000 München 90 (DE)**

Courier Press, Leamington Spa, England.

## Description

The present invention concerns hydroponics, i.e. the growing of plants with aqueous nutrient solutions into which the roots of the plants dip and without soil.

Hydroponics are to be distinguished from aeroponics (US—A 4 059 922) where the roots of the plant are suspended in air and aqueous nutrient solution is delivered in a spray rather than the roots dipping into the nutrient solution as is conventional and characterizing for hydroponics.

In all known hydroponic installations and systems, aeration, i.e. the supply of fresh oxygen and the withdrawal of carbon dioxide released by the roots, is a major problem that has not been satisfactorily resolved. The available literature on the aeration of culture solutions in hydroponics teaches that roots are killed in a nutrient solution that contains insufficient oxygen and excessive carbon dioxide.

Aeration is essential for root action, although the need of different species varies widely. Mineral uptake is impaired by decreasing oxygen while stimulated by increasing oxygen concentration. Accumulation of carbon dioxide in the solution depresses the absorption of most nutrients and water, while lack of oxygen causes an abrupt cessation of nutrient uptake but does not present continuation of water absorption.

A commonly used method for the aeration of nutrient solutions in hydroponics is the injection of air into the solution. However, practice has shown that this method is unsatisfactory. It was found that the rate of oxygen diffusion from air bubbles in the body of an aqueous nutrient solution and the rate of carbon dioxide diffusion from the solution into such bubbles are low as compared to the rates at which the roots take up oxygen from the solution and deliver carbon dioxide therein. In consequence, where a nutrient solution is aerated by air injection a steep gradient of oxygen concentration forms around each site of injection so that the oxygen concentration in the solution is non-uniform. Likewise, where such a technique is applied the carbon dioxide delivered by the roots is not adequately removed and in consequence a high concentration of carbon dioxide builds up around the roots.

Various ways and means have been proposed to overcome these difficulties. According to these proposals in hydroponic units using a flowing nutrient solution which is flowed through the vessel in which the plants are grown, the solution is reconstituted outside the vessel. Inside the vessel the solution is kept shallow so that only a fraction of the roots dip into the solution and means are provided for aerating the through-flowing solution either inside the vessel or before it enters therein. In this way the oxygen-carbon dioxide exchange occurs to a large extent in the atmosphere above the solution and the dangers of insufficient oxygen supply to the roots and the build-up of an excessive carbon dioxiode concentration around the roots are avoided to a large extent. However, these methods are highly sensitive to failures in the nutrient solution supply system. This is so because as soon as the nutrient solution in the vessel stops flowing the nutrient salts therein are depleted and rapidly exhausted and the plants wither and die.

The designer is thus faced with two apparently incompatible desiderata: From the point of view of effective oxygen-carbon dioxide exchange it is desired to keep the nutrient solution in the vessel shallow: from the point of view of the capacity of the system to absorb temporary failure in the nutrient solution supply system the body of solution in the vessel should be deep.

In EP—A1 0 010 737 is described a hydroponics system having a constantly flowing nutrient solution forming a deep body of solution inside the growing vessel, means being provided for establishing a fine mist of the solution in the air space above the body thereof. In that installation the nutrient solution flowing into the growing vessel and the solution which serves for the formation of said mist, are withdrawn in parallel streams from a reservoir that forms a separate unit. The spent solution is returned to that reservoir and is reconstituted therein. This system constitutes a significant improvement over the prior art in that it reconciles for the first time a deep body of nutrient solution with an effective oxygen-carbon dioxide exchange.

That hydroponic system is confined to flowing solutions. However for a variety of purposes as for example research, teaching, domestic gardening and the like, hydroponics installations are required in which the aqueous nutrient solution is a stationary deep body of solution.

It is the object of the present invention to provide a hydroponics unit with a stationary deep body of nutrient solution with adequate arrangements for an effective oxygen-carbon dioxide exchange and for securing best growing conditions by guarantiing the most effective oxygen-carbon exchange.

In accordance with the invention there is provided a hydroponics unit comprising a vessel adapted to hold a stationary deep body of nutrient solution and an air space above the deep body of nutrient solution, cover means on said vessel adapted to hold plants in a fashion that the roots dip into the deep body of the solution and to enable said air space to communicate with the surrounding atmosphere, which solves the problem underlying the invention by the provision of aerating means in the vessel adapted to suck nutrient solution from the deep body of the the solution in it and to spray it in atomized form into the air space above the solution and at the same time to agitate the solution so that there occurs a flow of solution around the roots of the plants, said aerating means comprising a motor shaft to which is/are mounted on atomising disc or blades, located, in use, above the surface of the body of solution, and a suction tube having at its upper end underneath the disc a plurality of discharge openings.

In the specification and claims the term "stationary" when used in relation to the nutrient solution in said vessel is meant to signify that the solution does not flow in and out of the vessel. It does not, however, mean that the solution inside the vessel is at rest and indeed, as stated above, by the action of said aerating means the solution is agitated with the formation of horizontal and vertical turbulences.

In a unit according to the invention the aerating means form a uniform mist which settles gradually into the solution absorbing on its way oxygen from the surrounding air space and releasing carbon dioxide thereto. As the uniform mist settles into the solution fresh oxygen is supplied to the solution in even distribution. Where the size of the vessel is larger than the spraying range of an individual aerating means two or more such aerating means may be provided.

In the mist that forms above the body of nutrient solution the oxygen-carbon dioxide exchange between the solution and the surrounding air space, i.e. the absorption of oxygen by the solution and the discharge of carbon dioxide therefrom, proceeds at rates which are several orders of magnitude higher than in the case where air is bubbled into the body of the solution.

The agitation of the solution caused by said aerating means has the effect that there occurs a flow of solution around the roots of the plants so that spent solution is replaced by reconstituted solution. In consequence, withdrawal of carbon dioxide from the solution and introduction of fresh oxygen into the solution proceed at rates which enable to maintain fresh conditions around the roots and prevent any decay thereof. To the best of the inventor's knowledge this is the first time that such results could be achieved with a stationary solution. In consequence it is no longer necessary to change the solution at short intervals and all that is required is the make-up of nutrient salts and water as they are consumed by the growing plants.

For make-up it is possible to place in the solution slow-release solid nutrient compositions as known per se. Alternatively solid nutrient material without any slow release properties may be added from time to time.

If desired, the container vessel may be made translucent and be of any desired colour and shade. Apart from the aesthetic aspects of such colour it may also have biological significance, e.g. for preventing the growth of algae and/or irradiation damages to the roots. Also if desired and to the same ends, the solution itself may be coloured.

The unit according to the invention is suitable for raising plants from start. i.e. from seeds, bulbs, buds, woody cuttings, apexes and quite generally for any known raising method. In addition it is of course suitable for growing plants to maturity.

In accordance with one embodiment of the invention a perforated supporting body is provided on the surface of the nutrient solution in the container which serves as support for the seeds, bulbs, cuttings, etc., during germination and rooting. Such support may be continuous and extend across the entire vessel, e.g. in the form of a floating net or perforated plate. Alternatively, an individual support may be associated with each plant holder, (US—A 3 660 993) preferably with a perforated bottom, which should have a removable insert (US—A 4 192 097).

The plant holders in a unit according to the invention may be of any suitable design. A specific embodiment will be described hereinafter with reference to the drawings, it being understood that the invention is not limited thereto.

As aerating means there is provided an electrical rotating atomizer having blades or a disc rotating in the air space above the solution and comprising an axial tube member dipping into the solution with discharge openings underneath the blades or disc. In operation the solution is agitated by and sucked upwards through said tube, and is ejected through said discharge openings and atomized by the blades or disc.

Preferably the operation of the aerating means is controlled so that they can operate at various intensities and/or intermittently. In this way the rate of oxygen-carbon dioxide exchange is controllable. Likewise the rate of release of make-up nutrient material into the solution may be controllable in accordance with specific requirements.

The mist that forms above the nutrient solution in a unit according to the invention in addition to being essential for the efective oxygen-carbon dioxide exchange, is also inducive to rooting where plants are raised from the start. In this context as well the control of the operation of the aerating means may be of significance, for example in order to be able to produce at the initial stage of rooting a denser mist than at subsequent stages.

The invention is illustrated, by way of example only, in the accompanying drawings in which;

Fig. 1 is a perspective view of a unit;
Fig. 2 is a section across the unit of Fig. 1; and
Fig. 3 is an exploded perspective view of a plant holder suitable for use in a unit of Fig. 1 and 2.

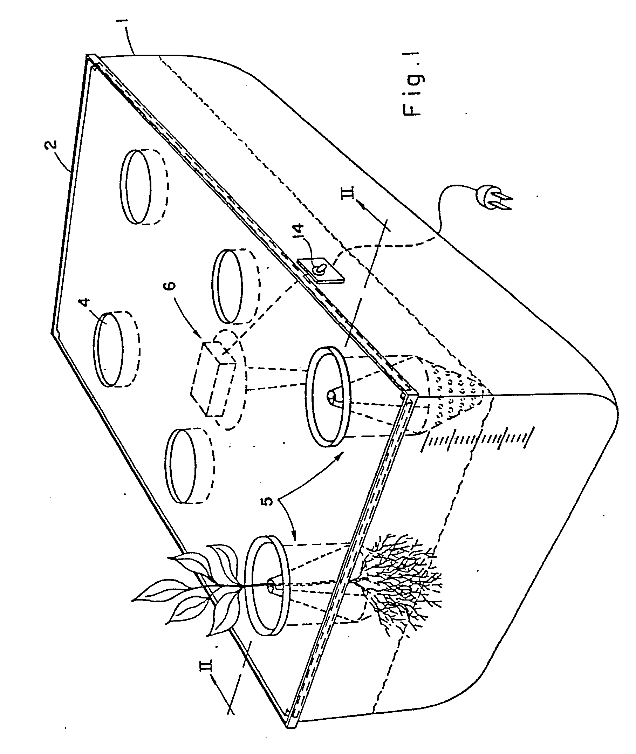

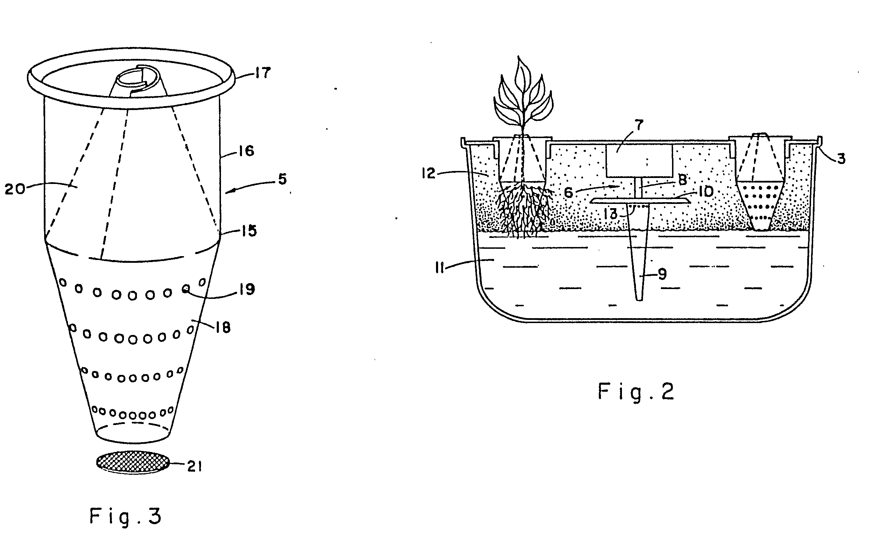

In the unit according to the invention shown in Figs. 1 and 2 only two plant holders are shown in position and only one of them is shown holding a plant. This is for the clarity of illustration and description only and in practice the unit will of course be loaded to capacity with plant holders and plants.

The unit here shown comprises a vessel 1 and a cover 2 resting on a circumferential shoulder 3 of vessel 1. The cover 2 comprises a plurality of openings 4 each of which is capable of holding a plant holder 5 and also provides for communication between the interior of vessel 1 and the surrounding air space.

Depending from cover 2 is an aerating device 6. Device 6 comprises an electric motor 7 having a shaft 8 on which is keyed a rotating disc 10. Also mounted on shaft 8 is a suction tube 9 of inverted conical shape having at its upper end underneath disc 10 a plurality of discharge openings 13. Vessel 1 holds a body of solution 12 and above it an air space 12. The inverted conical suction tube 9 dips into the body of solution 12 while disc 10 is located in the air space 12 thereabove.

Aerating device 6 is electrically connected to control means 14 on the outer side of the wall of vessel 1 by which the aerating device can be switched on and off and the rate of their operation can be controlled. If desired the operation of the aerating device 6 may be controlled by automatic, suitably programmed control means.

As shown in Fig. 3 each plant holder 5 comprises a body 15 having an upper, cylindrical portion 16 with a rim 17 and a lower, inverted conical portion 18 having a plurality of perforations 19. Within the upper, cylindrical portion 16 is positioned a conically shaped holding member 20 which is open at the top.

At the bottom the holder 5 comprises a disc-shaped net insert 21 which for the sake of illustration is shown separately.

Each holder 5 fits snugly into an opening in the cover 2 and is retained in this position by the rim 17.

The level of solution 11 inside vessel 1 is so adjusted that the bottom of each holder unit 5 reaches the surface of the solution. Where a plant is to be raised from the start, the plant material is placed on the perforated insert 21. If on the other hand a mature plant is to be grown in a unit according to the invention the insert 21 may not be required. Furthermore, it is possible to replace the individual perforated inserts 21 of holder units 5 by a continuous net or perforated plate floating or otherwise disposed on the surface of the solution inside vessel 1.

As the plant develops the stalk emerges through the upper opening of the conical member and root members penetrate through the bottom and the holes in the inverted conical portion 18 of the plant holder 5.

The aerating device 6 may operate continuously or intermittently as may be required. As device 6 operates, nutrient solution is raised through the inverted conical suction tube 9, is ejected through openings 13 and impinges on the rotating disc 10 whereby it is atomized and forms a mist. The mist so produced distributes evenly in the air space above the body of the solution and gradually settles into the solution, absorbing on its way oxygen from the surrounding air space and delivering carbon dioxide thereto.

The air space inside the vessel communicates with the surrounding atmosphere through the plant holders 5 which are of course not airtight. If desired, additional openings may be provided in cover 2 in order to ensure the desired communication between the air space within the vessel and the surrounding atmosphere. Preferably such additional openings will be so designed as to trap any escaping mist and return it to the vessel.

The plant holder described with reference to Fig. 3 is of course one example only and the invention is not limited thereto.

If desired, a unit according to the invention may comprise trailing means for the growing plants. Also if desired a unit according to the invention may comprise means such as a plastic bell or the like on top of cover 2, for maintaining a controlled micro-climate in the unit.

## Claims

1. A hydroponics unit comprising a vessel (1) adapted to hold a stationary deep body of nutrient solution (11) and an air space (12) above the deep body of solution, cover means (2) on the vessel (1) adapted to hold plants in a fashion that the roots dip into the deep body of solution and to enable the air space (12) to communicate with the surrounding atmosphere, characterized by

the provision of aerating means (6) in the vessel (1) adapted to suck nutrient solution from the deep body of the solution (11) in it and to spray it in atomized form into the air space (12) above the solution and at the same time to agitate the solution so that there occurs a flow of solution around the roots of the plants,

said aerating means (6) comprising a motor shaft (8) to which is/are mounted an atomizing disc (10) or blades, located, in use, above the surface of the body of solution, and a suction tube (9) having at its upper end underneath the disc (10) a plurality of discharge openings (13).

2. The unit according to claim 1, characterized by

the provision of a supporting body for the plants comprising a net (21) or perforated plate extending on top of the nutrient solution.

3. The unit according to claim 2, characterized in that

the supporting body floats on the solution.

4. The unit according to any one of claims 1 to 3, characterized in that

the cover means (2) comprises a plurality of openings (4) each of which is capable of holding a plant holder (5).

5. The unit according to claim 4, characterized in that

each of the plant holders (5) comprises a perforated bottom (21).

6. The unit according to claim 5, characterized in that

the perforated bottom (21) is a removable insert.

## Patentansprüche

1. Hydrokultureinrichtung mit einem Gefäß (1) zum Fassen einer hochstehenden, ruhenden Menge (11) an Nährlösung und eines Luftraums (12) oberhalb der hochstehenden Lösungsmenge, und einer Abdeckung (2) auf dem Geräß (1) zur Aufnahme von Pflanzen in der Weise, daß die Wurzeln in die hochstehende Lösungsmenge eintauchen, und zum Herstellen einer Verbindung zwischen dem Luftraum (12) und der umgebenden Atmosphäre, gekennzeichnet durch

eine Belüftungsvorrichtung (6) im Gefäß (1), die Nährlösung aus der hochstenden Menge an Nährlösung (11) im Gefäß (1) auzusaugen und in zerstäubter Form in den Luftraum (12) oberhalb der Lösung einzuspritzen vermag und zur gleichen Zeit die Lösung so zu bewegen vermag, daß Lösung um die Wurzeln der Pflanzen strömt,

wobei die Belüftungsvorrichtung (6) eine Motorwelle (8) aufweist, an der ein Zerstäubungsteller (10) oder Zerstäubungsflügel angebracht ist bzw. sind, welche(r) im Betrieb über dem Spiegel der Lösungsmenge angeordnet ist bzw. sind, und ein Saugrohr (9), dessen oberes Endstück unterhalb des Tellers (10) mehrere Abgabeöffnungen (13) aufweist.

2. Einrichtung nach Anspruch 1, gekennzeichnet durch einen Stützkörper für die Pflanzen mit einem Gitter (21) oder einer Lochplatte auf dem Spiegel der Nährlösung.

3. Einrichtung nach Anspruch 2, dadurch gekennzeichnet, daß

der Stützkörper auf der Lösung schwimmt.

4. Einrichtung nach einem der Ansprüche 1 bis 3, dadurch gekennzeichnet, daß

die Abdeckung (2) mehrere öffnungen (4) hat, von denen jede einen Pflanzenhalter (5) aufzunehmen vermag.

5. Einrichtung nach Anspruch 4, dadurch gekennzeichnet, daß

jeder der Pflanzenhalter (5) einen gelochten Boden.(21) aufweist.

6. Einrichtung nach Anspruch 5, dadurch gekennzeichnet, daß

der gelochte Boden (21) ein wegnehmbarer Einsatz ist.

**Revendications**

1. Installation hydroponique, comprenant un récipient (1) capable de recevoir un grand volume d'une solution nutritive (11), stationnaire et atteignant un niveau élevé, et un espace d'air (12) au-dessus du volume de solution à niveau élevé, et un couvercle (2) sur le récipient (1), capable de soutenir des plantes de telle manière que les racines plongent dans le volume de solution à niveau élevé, et d'établir une communication entre l'espace d'air (12) et l'atmosphère ambiante, caractérisée par

un dispositif d'aération (6) dans le récipient (1), ce dispositif étant capable d'aspirer de la solution nutritive dans le volume à niveau élevé de la solution (11), rempli dans le récipient, et de l'injecter, sous forme atomisée, dans l'espace d'air (1) au-dessus de la solution, et, en même temps, capable d'agiter la solution de telle manière qu'un courant de solution se produit autour des racines des plantes,

ledit dispositif d'aération (6) comprenant un arbre de moteur (8) sur lequel est ou sont montés un disque (10) ou des ailettes de pulvérisation qui, en position de service, est ou sont disposé(es) au-dessus de la surface du volume de solution, et un tube d'aspiration (9) qui, à son extrémité supérieure, en-dessous du disque (10), est muni de plusieurs ouvertures d'émission (13).

2. Installation selon la revendication 1, caractérisée par

un corps de soutien des plantes, comprenant un réseau (21), ou une plaque perforée, qui s'étend sur la solution nutritive.

3. Installation selon la revendication 2, caractérisée en ce que

le corps de soutien flotte sur la solution.

4. Installation selon l'une quelconque des revendications 1 à 3, caractérisée en ce que

le couvercle (2) est muni de plusieurs ouvertures (4) aptes, chacune, à recevoir un porte-plantes (5).

5. Installation selon la revendication 4, caractérisée en ce que

chacun des porte-plantes (5) est muni d'un fond perforé (21).

6. Installation selon la revendication 5, characterisée en ce que

le fond perforé (21) est un élément rapporté démontable.

Fig.1